# FASCICULE DE BREVET EUROPEEN

(11) **EP 2 177 443 B1**
(45) Date de publication et mention de la délivrance du brevet: **22.06.2011**
(21) Numéro de dépôt: 09171640.7
(22) Date de dépôt: 29.09.2009
(51) Int. Cl.: B65D 25/20, G06K 7/00

(54) **Dispositif réutilisable pour le transport et le stockage de marchandises, muni d'un identifiant, système pour son identification et installation pour son suivi.**
Wieder verwendbare Vorrichtung für den Warentransport und die Warenlagerung, die mit einer Identifikationskennung ausgestattet ist, System zu ihrer Identifizierung und Installation zu ihrer Nachverfolgung
Reusable device for transporting and storing goods, equipped with an identifier, system for its identification and installation for its monitoring.

(30) Priorité: 08.10.2008 FR 0856816
(43) Date de publication de la demande: 21.04.2010
(73) Titulaire: IER, 92150 Suresnes (FR)
(72) Inventeur: Ruffle, Pascal, 78690 Les Essarts le Roi (FR); Muller, Franck, F-13290 LES MILLES (FR); Lardiere, Brice, 92100 Boulogne Billancourt (FR)
(74) Mandataire: Pontet, Bernard

(56) Documents cités:
- EP-A- 1 693 807
- EP-A- 1 710 165
- WO-A-01/44061
- WO-A-93/16531
- FR-A- 2 914 085
- US-A1- 2008 218 356

## Description

La présente invention concerne un dispositif réutilisable pour le transport et le stockage de marchandises, muni d'un identifiant. Elle concerne également un système d'identification d'un tel dispositif et une installation pour le suivi de tels dispositifs.

La présente invention se rapporte plus particulièrement au domaine des contenants ou emballages de transport munis d'étiquettes électromagnétiques comportant une donnée d'identification.

Actuellement, il existe des caisses pour le transport et le stockage de marchandises, réutilisables, pliables ou non, chacune comportant une étiquette d'identification électromagnétique, et plus particulièrement une étiquette d'identification radiofréquence communément appelée étiquette RFID (Radio Frequency Identification).

Ces caisses de transport se présentent généralement sous différentes dimensions. Les caisses pliables peuvent, lorsqu'elles sont ouvertes, présenter des hauteurs différentes selon les modèles : 115 cm, 165 cm, 190 cm, 235 cm. En revanche, une fois pliée, la hauteur des caisses est sensiblement la même pour tous les modèles.

Les caisses de transport et stockage sont, la plupart du temps, rangées et transportées sous forme de palettes de deux formats différents. Un premier format de palette, dit format Europe, de dimensions 80x100cm, permet d'avoir 4 caisses par niveau (colonne), et un deuxième format de palette, de dimensions 100x120 permet d'avoir 5 caisses par niveau (colonne). Lorsque les caisses sont vides, on peut avoir un maximum de 50 caisses par colonne : soit 200 caisses pour une palette au format Europe par exemple. Une fois les palettes constituées, celles-ci passent sous des portiques comportant des moyens de lecture agencés pour lire les données d'identification associées à chaque caisse présente dans la palette et l'ensemble des caisses doit ainsi être identifié.

Les palettes peuvent être prises par des transpalettes, chariots autoportés, fenwick, etc... par les 4 côtés pour passer sous un portique RFID. Le sens de passage de la palette sous le portique RFID UHF est identique ou à l'opposé du sens de prise selon que l'on charge ou décharge des camions par exemple.

La technologie électromagnétique, et plus particulièrement RFID, permet d'identifier simplement et rapidement différents objets ou contenants, éventuellement afin de les tracer. La bande de fréquences utilisée est en général la bande UHF (Ultra Hautes Fréquences) correspondant à la bande de fréquences 850-950 MHz.

Dans la logistique, cette technologie est utilisée pour l'identification et le traçage de caisses plastiques. Elle permet de suivre les contenants, puis les contenus dans le futur, durant leurs déplacements dans la chaîne logistique.

Le brevet EP 1 710 165 décrit une caisse comportant une ou plusieurs étiquettes RFID situées au niveau de la caisse.

Cependant, de nombreux tests ont été réalisés par la demanderesse pour tenter de lire l'ensemble de caisses passant sous des portiques RFID UHF. Ces tests montrent que les caisses actuellement connues, telles que les caisses décrites dans le brevet EP 1 710 165, ne permettent pas une bonne lecture de la donnée d'identification associée à chaque caisse. Le taux de lecture varie selon le sens de passage ou l'état de la caisse à savoir caisse vide, pliée ou remplie. Les tests montrent par ailleurs que le taux de lecture varie selon les marchandises présentes dans les caisses.

Le document US-A-2008/0218356 décrit un dispositif réutilisable selon le préambule de la revendication 1.

Un but de la présente invention est de remédier aux inconvénients précités.

Un autre but de l'invention est de proposer un dispositif pour le transport et la conservation de marchandises permettant une meilleure lecture d'une donnée d'identification associée à la caisse.

Un autre but de l'invention est de proposer un dispositif pour le transport et la conservation de marchandises permettant une bonne lecture d'une donnée d'identification associée à la caisse quel que soit le sens de passage de palettes et quelle que soit la marchandise contenue dans le dispositif.

Enfin, un autre but de l'invention est de proposer un dispositif pour le transport et la conservation de marchandises permettant une bonne lecture d'une donnée d'identification associée à la caisse quel que soit l'état du dispositif.

L'invention propose d'atteindre les buts précités par un dispositif réutilisable pour le transport et la conservation de marchandises se présentant sensiblement sous une forme rectangulaire selon la revendication 1.

Dans la suite nous utiliserons le terme « caisse » pour désigner un dispositif pour le transport et la conservation de marchandises selon l'invention.

Les étiquettes des caisses doivent pouvoir être lues quel que soit le sens de passage de la palette et lorsque les caisses sont ouvertes, et donc remplies, et fermées et empilées sur palette.

Les tests réalisés par la demanderesse ont montré que le contenu de la caisse influe fortement sur la lecture des étiquettes apposées sur celle-ci. Par exemple, lorsque les fréquences utilisées sont dans le spectre d'absorption de l'eau, par exemple les fréquences UHF (850-950 MHz) et que la caisse contient un produit contenant une forte densité d'eau qui se retrouve proche à une distance inférieure à 2 mm, l'étiquette est désaccordée et devient très difficile à lire pour un lecteur RFID car la puissance de retour de l'étiquette est très faible. L'étiquette peut être disposée sur une surépaisseur formée sur au niveau d'une paroi de la caisse et maintenant l'étiquette à une minimum de 2mm par rapport à la surface intérieure de la caisse.

Par ailleurs, la disposition de deux étiquettes à deux emplacements sensiblement opposés permet d'augmenter le taux de lecture quel que soit le sens de passage de la palette. En effet, cette disposition des étiquettes permet d'avoir une étiquette qui est toujours près du bord extérieure de la palette et donc plus facilement lisible pour les lecteurs.

Selon un autre mode de réalisation particulier, les étiquettes peuvent être disposées sur deux parois latérales adjacentes de la caisse de manière sensiblement opposée.

Selon un mode de réalisation préféré, les étiquettes peuvent être disposées sur deux parois latérales opposées.

Lorsque les étiquettes sont disposées sur les parois latérales ou sur les arrêtes de la caisse, elles ne sont pas abîmées lorsque la caisse est disposée au sol lors de son remplissage dans un champ par exemple.

La disposition de chaque étiquette à une distance inférieure ou égale à 3cm de l'arrête à proximité de laquelle elle est disposée, permet de protéger l'étiquette contre des chocs latérales.

Par ailleurs, chacune des étiquettes peut être disposée près du bord supérieur de la paroi latérale sur laquelle elle est disposée. Une telle disposition permet d'améliorer la lecture de l'étiquette quel que soit l'état de la caisse. D'une part, lorsque la caisse est pliée, étant disposée près du bord supérieur, l'étiquette reste toujours visible. D'autre part, lorsque la caisse est remplie de marchandises, elle n'est jamais remplie jusqu'au bord supérieure pour pouvoir ranger les caisses les unes sur les autres sans abîmer les marchandises. Ainsi, l'étiquette reste toujours à distance des marchandises contenues dans la caisse et l'influence des marchandises sur l'étiquette est diminuée voire annulée.

Avantageusement, chaque étiquette peut être disposée à une distance supérieure ou égale à 3cm du bord près duquel elle est disposée, ce qui permet de protéger l'étiquette contre les chocs verticaux.

La dispotion de chaque étiquette sur la face extérieure de la caisse, facilite le positionnement de l'étiquette sur la caisse.

Dans ce cas, l'étiquette peut en outre être disposée dans un évidement formé sur la face extérieure de la caisse, maintenant ladite étiquette en retrait par rapport à un plan formé par la face extérieure de la caisse, mettant ainsi l'étiquette à l'abri des chocs qui s'exercent sur cette face de la caisse.

La paroi latérale de la caisse peut comporter au moins une forme disposée sur cette surface extérieure à proximité ou autour de l'étiquette protégeant ainsi ladite étiquette contre les chocs externes s'exerçant sur cette surface, ladite étiquette se trouvant alors en retrait par rapport à l'extrémité de ladite forme.

L'étiquette peut être disposée en rentrait d'une distance supérieure ou égale à 5mm. Le fait que l'étiquette se retrouve en retrait permet aussi de diminuer l'influence des objets au contact de la palette sur la lecture de l'étiquette. Par exemple, lorsqu'une palette au format Europe est prise à la perpendiculaire, des étiquettes peuvent se retrouver collées contre des parties métalliques du fenwick transportant la palette. Les étiquettes collées contre le métal deviennent illisibles par le portique RFID (désaccord du tag par le métal). Le fait de maintenir l'étiquette en rentrait permet d'éviter l'influence des parties métalliques des moyens de transport de la palette ou l'influence de tout autre objet au contact de la caisse sur les surfaces extérieures des parois de la caisse.

Avantageusement, la caisse selon l'invention peut présenter une ou plusieurs parois latérales pliables, chacune des étiquettes étant disposée sur la partie d'une paroi se trouvant, en position pliée, sur une autre paroi ou sur une partie d'une autre paroi maintenant ainsi l'étiquette dans une position visible pour les moyens de lecture de la donnée d'identification contenue dans l'étiquette.

La caisse selon l'invention peut en outre présenter une forme adaptée pour être rangée par empilement avec plusieurs autres caisses identiques.

Selon une réalisation particulière, au moins une des étiquettes d'identification est une étiquette RFID, en particulier des étiquettes fonctionnant dans la bande UHF.

La caisse selon l'invention peut être réalisée en plastique ou tout autre matière ayant une faible influence sur les ondes électromagnétiques utilisées.

Suivant encore un autre aspect de l'invention, il est proposé un système d'identification de dispositifs réutilisables pour le transport et la conservation de marchandises, selon la revendication 13.

Avantageusement, les étiquettes d'identification peuvent être des étiquettes RFID, et les moyens de lecture peuvent comprendre au moins une antenne RFID disposée sur un portique traversé par les dispositifs réutilisables.

Selon une version différente, l'antenne RFID peut aussi être disposée sur un lecteur portable, de type PDA par exemple, positionné à proximité des dispositifs réutilisables.

Suivant encore un autre aspect de l'invention, il est proposé une installation pour le suivi de dispositifs réutilisables pour le transport et la conservation de marchandises, selon la revendication 16.

Le module peut être en communication avec chacun des systèmes selon l'invention au travers d'un réseau de type Internet.

D'autres avantages et caractéristiques apparaîtront à l'examen de la description détaillée d'un mode de réalisation nullement limitatif, et des dessins annexés sur lesquels :
- les figures 1 et 2 sont des représentations schématiques de deux formats de palettes généralement utilisés et les sens de transport pour chacun des formats de palette ;
- la figure 3 est une représentation schématique d'une caisse selon l'invention munie de deux étiquettes ;
- la figure 4 et 5 sont des représentations schématiques des positionnements d'une palette selon le format représenté en figure 1 lors de la lecture des étiquettes par des moyens de lecture ;
- la figure 6 est une représentation schématique du positionnement d'une palette selon le format représenté en figure 2 lors de la lecture des étiquettes par des moyens de lecture ;
- la figure 7 est une représentation schématique d'une caisse pliable en plastique selon l'invention selon une vue de face ;
- la figure 8 est une représentation agrandie de l'étiquette de la caisse de la figure 6 ;
- la figure 9 est une représentation schématique en coupe de la caisse de la figure 7 au niveau de la position d'une étiquette ;
- la figure 10 est une représentation selon une vue agrandie de l'étiquette de la caisse de la figure 9 ;
- les figures 11 et 12 sont des représentations schématiques selon une vue de face d'autres exemples de caisses selon l'invention ;
- la figure 13 est une représentation schématique d'un système selon l'invention ; et
- la figure 14 est une représentation schématique d'une installation selon l'invention.

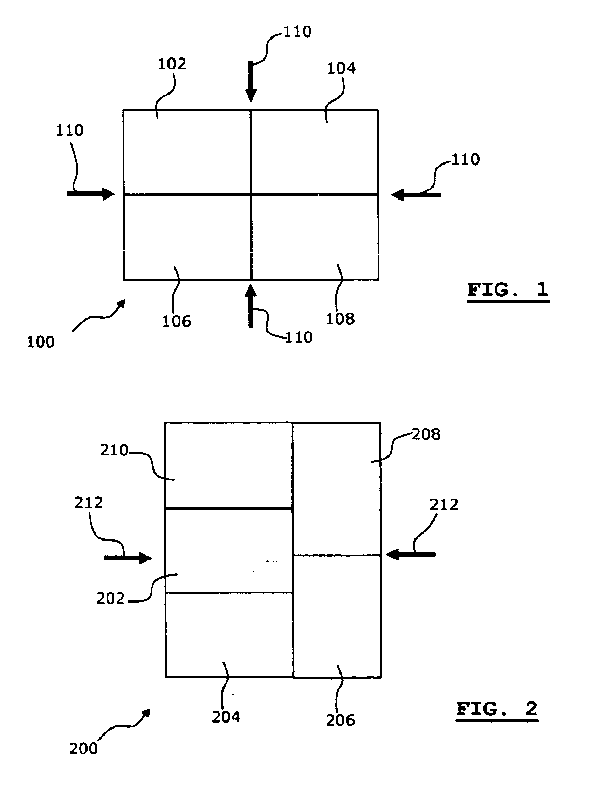

Les figures 1 et 2 sont des représentations schématiques de deux formats 100 et 200 de palette. Le format 100 représenté en figure 1, est aussi appelé le format Europe, et comprend quatre rangées 102, 104, 106 et 108 de caisses.

La palette au format 100 peut être transportée selon deux directions et pour chacune des directions selon deux sens. Les sens de transport de la palette au format 100 sont indiqués par les flèches 110.

La palette au format 200 représenté en figure 2, comprend cinq rangées 202, 204, 206, 208 et 210 de caisses. La palette au format 200 peut être transportée selon deux sens indiqués par les flèches 212.

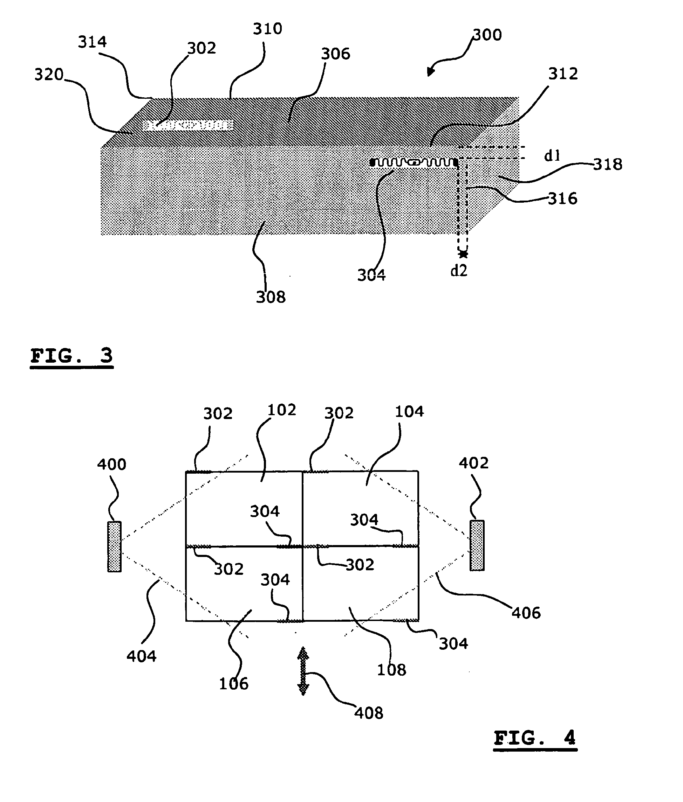

La figure 3 est une représentation schématique selon une vue isométrique d'une caisse 300. La caisse 300 comporte deux étiquettes RFID UHF 302 et 304. Les étiquettes 302 et 304 comportent une même donnée d'identification qui est associée à la caisse 300.

Les étiquettes 302 et 304 sont positionnées sur la face extérieure de deux parois opposées, respectivement 306 et 308, de la caisse 300.

Par ailleurs, lorsque la caisse 300 contient des marchandises, telles que des fruits et légumes, présentant une forte teneur en eau, ces marchandises peuvent influencer le fonctionnement des étiquettes et désaccordent les étiquettes 302 et 304. Pour éviter cette influence, les étiquettes 302 et 304 sont positionnées sur la partie haute des parois 306 et 308 de la caisse 300. Ainsi, les étiquettes sont suffisamment éloignées des marchandises contenues dans la caisse 300 car lorsque les caisses contiennent des marchandises, elles ne sont jamais remplies totalement pour ne pas abîmer les marchandises et pour pouvoir superposer les caisses contenant des marchandises les unes sur les autres. Un tel positionnement des étiquettes 302 et 304 sur la caisse 300 permet de diminuer les influences des marchandises contenues dans la caisse 300 sur ces étiquettes 302 et 304 et les étiquettes 302 et 304 ne sont pas désaccordées.

De plus, comme les étiquettes 302 et 304 sont positionnées sur deux parois opposées, respectivement 306 et 308, une de ces étiquettes 302 ou 304 est toujours visible par les moyens de lecture, quel que soit le format de palette utilisé et le sens de transport de la palette.

Les étiquettes 302 et 306 sont en outre positionnées à une distance d1, supérieure ou égale à 3cm, du bord supérieur, respectivement 310 et 312, de chacune des parois 306 et 308 et à une distance d2, supérieure ou égale à 3cm, de chacune de deux arrêtes, respectivement 314 et 316, diamétralement opposées de la caisse 300. Un tel positionnement permet de protéger les étiquettes contre les chocs verticaux et les chocs horizontaux s'exerçant par frottement sur les parois 318 et 320 de la caisse 300 qui ne portent pas d'étiquettes.

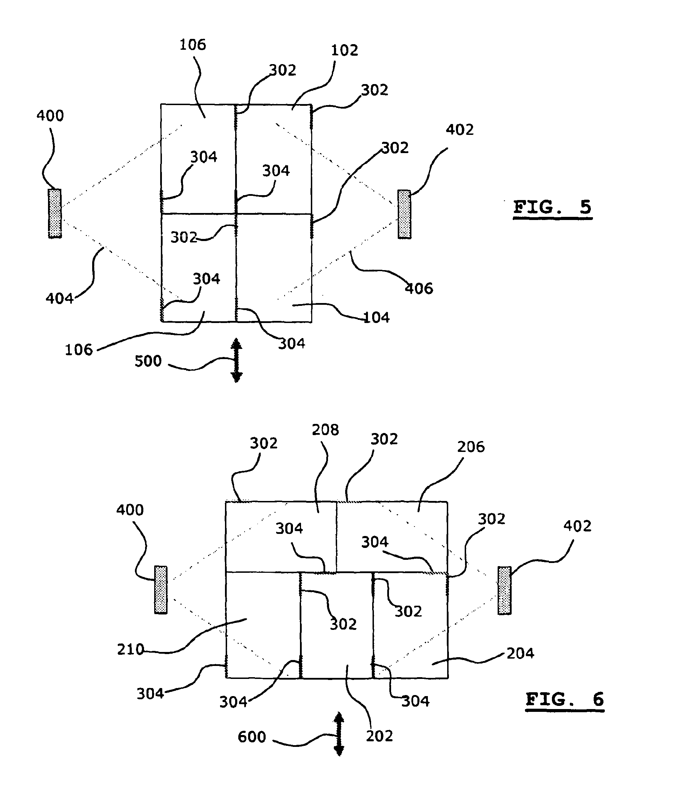

Les figures 4 et 5 sont des représentations schématiques des positionnements d'une palette selon le format 100 représenté en figure 1 lors de la lecture des étiquettes par des moyens de lecture 400 et 402 disposés respectivement de part et d'autre de la palette de manière que lorsque la palette 100 est transportée elle passe entre les moyens de lecture 400 et 402. Les moyens de lecture 400 et 402 émettent chacun un faisceau d'ondes électromagnétiques, respectivement 404 et 406. On remarque que lorsque la palette est transportée selon une première direction indiquée par la flèche 408, figure 4, ce sont les étiquettes 302 qui sont lues. Par contre, lorsque la palette est transportée selon la direction indiquée par la flèche 500 perpendiculaire à la direction indiquée par la flèche 408, voir figure 5, ce sont les étiquettes 304 qui sont lues par les moyens de lecture 400 et 402.

La figure 6 est une représentation schématique du positionnement d'une palette selon le format 200 représenté en figure 2. Tel qu'indiqué plus haut, cette palette ne peut être transportée que selon une seule direction qui est rappelée par la flèche 600. Dans ce cas, en fonction du positionnement des caisses, les étiquettes lues par les moyens de lecture peuvent être soit des étiquettes 302 soit des étiquettes 304.

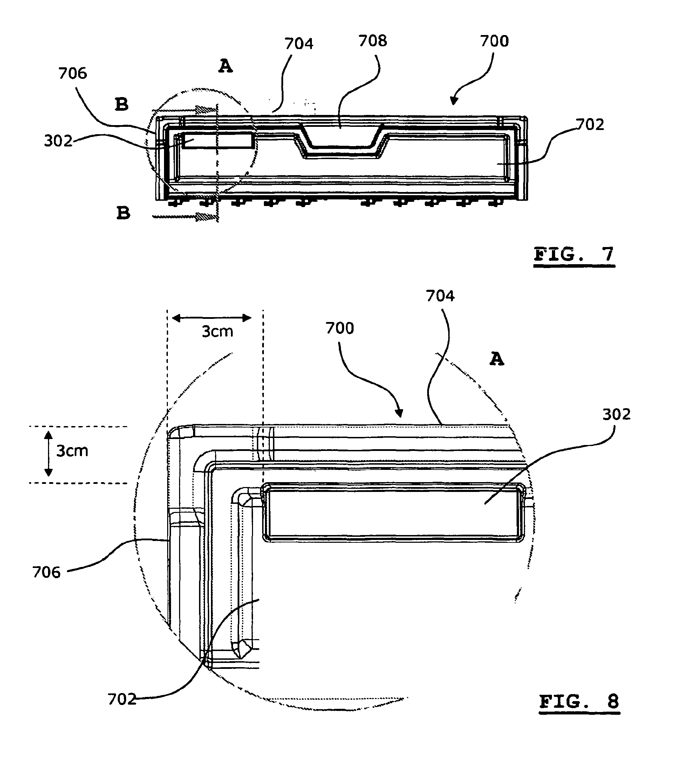

La figure 7 est une représentation schématique selon une vue de face d'une caisse 700, pliable, en plastique, réutilisable et munie de deux étiquettes RFID dont une seule est visible sur cette figure 7 et la figure 8 est une représentation agrandie de la partie A de la caisse 700 où est disposée l'étiquette 302. L'étiquette 302 est positionnée en partie haute d'une paroi 702 à une distance de 3cm du bord supérieure 704 et de l'arrête 706 permettant ainsi de protéger l'étiquette 302 tel qu'expliqué plus haut. La paroi 702 comporte en sa partie haute une ouverture 708 permettant à un utilisateur de se saisir de la caisse 700.

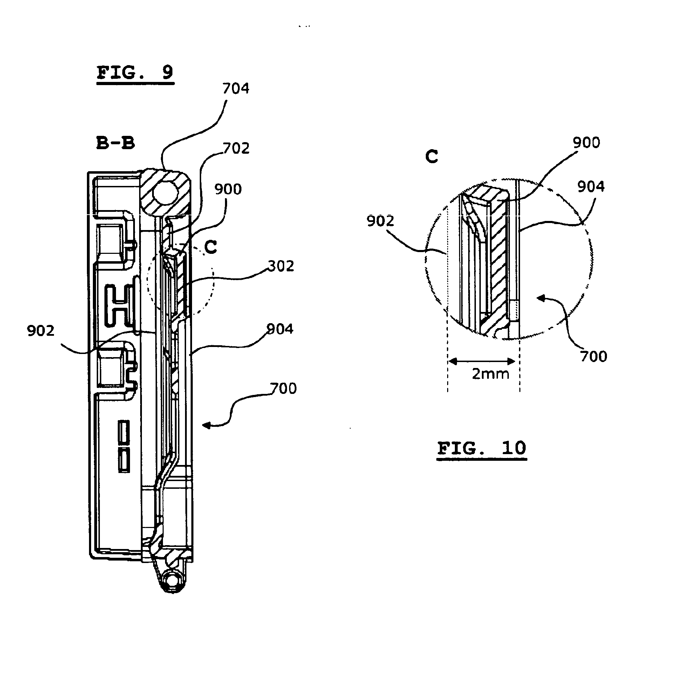

La figure 9 est une représentation schématique en coupe, selon la ligne BB de la caisse 700 de la figure 7 au niveau de la position d'une étiquette et la figure 10 est une représentation agrandie de la position C de l'étiquette selon la vue de coupe de la figure 9. On peut observer sur ces figures que l'étiquette 302 est disposée sur un bossage 900 formé dans la paroi 702 de la caisse 700 et permettant de maintenir l'étiquette :
- à 2mm de la face intérieure 902 de la paroi 702 de la caisse 700, permettant ainsi de limiter les influences des marchandises contenues dans la caisse 700 sur l'étiquette 302, et
- en retrait par rapport à un plan 904 formé par la face extérieure ou les bords de la paroi 702 de manière à protéger l'étiquette contre les chocs s'exerçant sur la caisse 700 au niveau de sa paroi 702 portant l'étiquette 302.

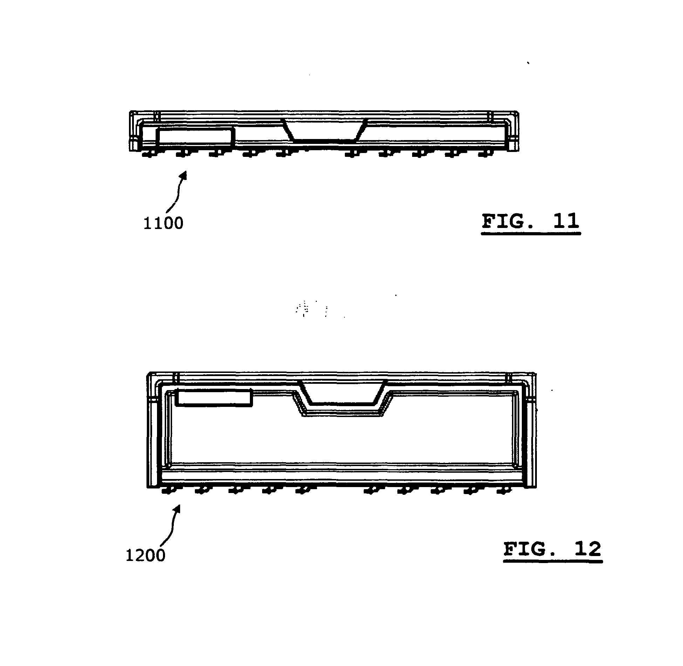

Les figures 11 et 12 sont des représentations schématiques selon une vue de face de deux autres exemples de caisses, respectivement 1100 et 1200, en plastique, réutilisables, pliables présentant des hauteurs différentes lorsqu'elles sont dépliées.

Dans le cas des caisses pliables 700, 1100 et 1200, les étiquettes sont placées avantageusement sur les deux parois opposées qui se plient sur les deux autres parois de la caisse. Ces parois peuvent êtres les parois les plus longues ou les plus courtes de la caisse du moment que les parois en question présentent une longueur suffisante pour positionner les étiquettes en tenant compte des critères d'écartement précisés plus haut.

Les caisses en plastique selon l'invention peuvent être obtenues par moulage en une ou plusieurs pièces.

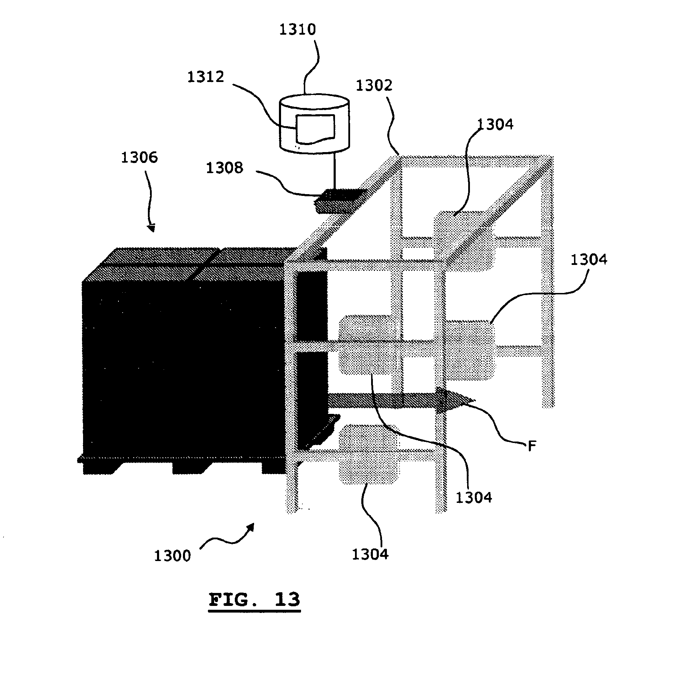

La figure 13 est une représentation schématique d'un système 1300 d'identification selon l'invention. Le système 1300 comprend un portique 1302 comporte des antennes RFID 1304 disposées sur le portique 1302 de manière que lorsqu'une palette 1306 passe au travers du portique 1302, selon le sens de passage indiqué par la flèche F, les antennes 1304 soient disposées de part et d'autre de la palette 1306.

Les antennes RFID 1304 réalisent la lecture de la donnée d'identification associée à chaque caisse et enregistrée dans les deux étiquettes RFID disposées sur chaque caisse. Les antennes 1304 sont reliées à un module de gestion 1308 qui enregistre les données lues dans des moyens de mémorisation 1310 sous forme par exemple d'une liste 1312. Avant d'enregistrer une donnée d'identification lue dans les moyens de mémorisation 1310, le module de gestion 1308 vérifie, à l'aide par exemple d'un algorithme exécuté dans le module 1308, si cette donnée n'est pas déjà enregistrée dans la liste 1312. Si elle apparaît déjà dans la liste, cela veut dire que la donnée a déjà été lue depuis une des deux étiquettes disposées sur la caisse à laquelle elle est associée. Si elle n'apparaît pas dans la liste alors la donnée lue est enregistrée dans la liste 1312.

Une nouvelle liste peut être créée soit pour chaque nouvelle opération, par exemple un nouveau chargement ou un nouveau déchargement de camion, soit pour chaque nouvelle palette de caisses. Chacune des listes 1302 peut comporter des données additionnelles telles que la date et l'heure de lecture de chaque donnée d'identification ainsi que l'opération lors de laquelle la donnée d'identification est lue.

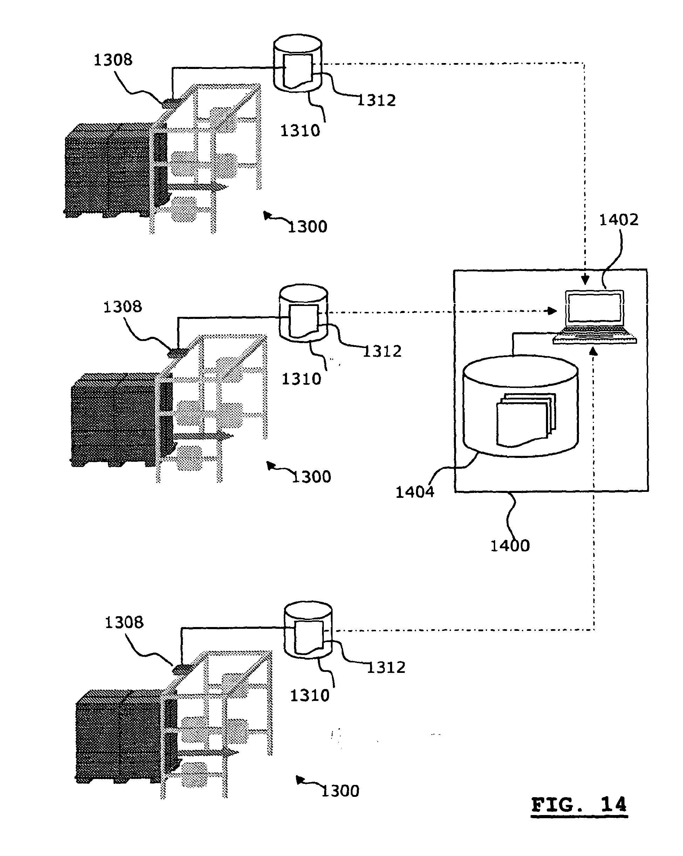

La figure 14 est une représentation schématique d'une installation de suivi de caisses selon l'invention comprenant une pluralité de systèmes 1300 selon l'invention et un module central 1400 en communication, au moins indirecte, au travers par exemple d'un réseau de type Internet, avec chacun des modules de gestion 1308 de chacun des systèmes 1300 selon l'invention. Chacune des listes 1312 au niveau de chacun des systèmes 1300 est transmise au module central 1400 comprenant des moyens informatiques 1402 qui réalisent la mémorisation de chacune des listes dans des moyens de mémorisation 1404 puis une analyse de ces listes est réalisée à l'aide d'un algorithme adapté, par exemple sur demande, pour déterminer l'acheminement d'une ou plusieurs caisses.

Bien entendu l'invention n'est pas limitée aux exemples qui viennent d'être décrits. Des modifications peuvent être apportées à l'invention telle que décrite ci-dessus, sans que cela sorte du champ de l'invention, tel que défini dans les revendications.

## Revendications

1. Dispositif réutilisable pour le transport et la conservation de marchandises se présentant sensiblement sous une forme rectangulaire, ledit dispositif comportant au moins deux étiquettes (302,304) d'identification électromagnétiques, lesdites étiquettes (302,304) d'identification comportant au moins une même donnée d'identification, et étant disposées sur ladite caisse à deux emplacements sensiblement opposés, **caractérisé en ce que** lesdites étiquettes (302, 304) d'identification sont disposées
- sur la face extérieure de deux parois latérales (306, 308),
- à une distance supérieure ou égale à 2mm de la face intérieure (902) de la caisse, et
- à une distance inférieure ou égale à 3cm de deux arêtes verticales (314,316) dudit dispositif diamétralement opposées.

2. Dispositif selon la revendication 1, **caractérisé en ce que** les parois latérales sur lesquelles sont disposées les étiquettes sont des parois opposées.

3. Dispositif selon la revendication 1, **caractérisé en ce que** les parois latérales sur lesquelles sont disposées les étiquettes sont des parois adjacentes.

4. Dispositif selon l'une quelconque des revendications précédentes, **caractérisée en ce que** chacune des étiquettes (302,304) est disposée près du bord supérieur (310,312) de la paroi latérale (306,308) sur laquelle elle est disposée.

5. Dispositif selon la revendication 4, **caractérisé en ce que** chaque étiquette est disposée à une distance supérieure ou égale à 3cm du bord supérieur (310,312) près duquel elle est disposée.

6. Dispositif selon l'une quelconque des revendications précédentes, **caractérisée en ce qu'**au moins une étiquette est disposée dans un évidement formé sur la face extérieure dudit dispositif, maintenant ladite étiquette en retrait par rapport au plan (904) formé par la face extérieure dudit dispositif.

7. Dispositif selon l'une quelconque des revendications précédentes, **caractérisée en ce qu'**elle comporte au moins une forme disposée sur la face extérieure dudit dispositif à proximité ou autour de l'étiquette (302,304) protégeant ainsi ladite étiquette (302,304) contre les chocs externes, ladite étiquette se trouvant en retrait par rapport à l'extrémité de ladite forme.

8. Dispositif selon l'une quelconque des revendications 6 ou 7, **caractérisée en ce que** l'étiquette (302,304) est disposée en retrait d'une distance supérieure ou égaie à 5mm.

9. Dispositif selon l'une quelconque des revendications précédentes, **caractérisée en ce qu'**elle présente des parois latérales pliables, chacune des étiquettes (302,304) étant disposée sur la partie d'une paroi se trouvant, en position pliée, sur une autre paroi ou sur une partie d'une autre paroi.

10. Dispositif selon l'une quelconque des revendications précédentes, **caractérisée en ce qu'**elle présente une forme adaptée pour être rangée par empilement avec plusieurs autres dispositifs identiques.

11. Dispositif selon l'une quelconque des revendications précédentes, **caractérisée en ce qu'**au moins une des étiquettes (302,304) d'identification est une étiquette RFID.

12. Dispositif selon la revendication 11, **caractérisé en ce que** les étiquettes RFID fonctionnent dans la bande UHF.

13. Système d'identification de dispositifs (300) réutilisables pour le transport et la conservation de marchandises, ledit système comprenant :
- au moins deux dispositifs (300) selon l'une quelconque des revendications précédentes, chacun desdits dispositifs (300) comportant au moins deux étiquettes d'identification électromagnétiques (302,304) comportant une donnée d'identification identique, lesdits dispositifs (300) se présentant sous la forme d'au moins un empilement comportant une pluralité de dispositifs (300)
- des moyens de mémorisation (1312) pour mémoriser des données d'identification,
- des moyens de lecture (1304) d'une nouvelle donnée d'identification, et
- des moyens informatiques (1402) de comparaison de ladite donnée lue avec des données d'identification enregistrées dans des moyens de mémorisation (1404), lesdits moyens informatiques (1402) réalisant la mémorisation de ladite donnée d'identification lue dans lesdits moyens de mémorisation (1404) lorsque ladite donnée lue n'est pas déjà enregistrée dans lesdits moyens de mémorisation (1404).

14. Système selon la revendication 13, **caractérisé en ce que** les étiquettes d'identification (302,304) sont des étiquettes RFID, et les moyens de lecture comprennent au moins une antenne RFID (1304) disposée sur un portique (1302) traversé par lesdits dispositifs (302).

15. Système selon la revendication 13, **caractérisé en ce que** les étiquettes d'identification (302,304) sont des étiquettes RFID, et les moyens de lecture comprennent au moins une antenne RFID (1304) disposée sur un lecteur portable.

16. Installation pour le suivi de dispositifs réutilisables (300) pour le transport et la conservation de marchandises, comprenant plusieurs systèmes (1300) selon l'une quelconque des revendications 13 à 15, ladite installation comprenant un module (1400) en communication, au moins indirectement, avec lesdits systèmes (1300), les données d'identification lues par chacun desdits systèmes (1300) étant communiquées audit module (1400).

## Claims

1. Reusable device for the transport and conservation of goods, having a substantially rectangular shape, said device comprising at least two (302,304) electromagnetic identification tags, said identification tags (302,304) including at least one identification data that is the same, and being arranged on said case in two substantially opposite locations, **characterized in that** said identification tags (302,304) are arranged:
- on the outer face of two side walls (306,308),
- at a distance greater than or equal to 2 mm from the inner face (902) of the case, and
- at a distance less than or equal to 3 cm from two diametrically opposite vertical edges (314,316) of said device.

2. Device according to claim 1, **characterized in that** the side walls on which the tags are arranged are opposite walls.

3. Device according to claim 1, **characterized in that** the side walls on which the tags are arranged are adjacent walls.

4. Device according to any one of the previous claims, **characterized in that** each of the tags (302,304) is arranged close to the upper edge (310,312) of the side wall (306,308) on which it is arranged.

5. Device according to claim 4, **characterized in that** each tag is arranged at a distance greater than or equal to 3 cm from the upper edge (310,312) close to which it is arranged.

6. Device according to any one of the previous claims, **characterized in that** at least one tag is arranged in a recess formed on the outer face of said device, keeping said tag recessed with respect to the plane (904) formed by the outer face of said device.

7. Device according to any one of the previous claims, **characterized in that** it contains at least one shape arranged on the outer face of said device close to or around the tag (302,304) thus protecting said tag (302,304) against external impacts, said tag being recessed with respect to the end of said shape.

8. Device according to either one of claims 6 or 7, **characterized in that** the tag (302,304) is arranged recessed by a distance greater than or equal to 5 mm.

9. Device according to any one of the previous claims, **characterized in that** it has foldable side walls, each of the tags (302,304) being arranged on the portion of a wall that in the folded position is over another wall or over a portion of another wall.

10. Device according to any one of the previous claims, **characterized in that** it has a suitable shape for stacking together with several other identical devices.

11. Device according to any one of the previous claims, **characterized in that** at least one of the identification tags (302,304) is an RFID tag.

12. Device according to claim 11, **characterized in that** the RFID tags operate in the UHF band.

13. System for the identification of reusable devices (300) for the transport and conservation of goods, said system comprising:
- at least two devices (300) according to any one of the previous claims, each of said devices (300) comprising at least two electromagnetic identification tags (302,304) including an identical identification data, said devices (300) being in the form of at least one stack including a plurality of devices (300),
- storage means (1312) for storing identification data,
- reading means (1304) of a new identification data, and
- computerized means (1402) for comparison of said read data with identification data recorded in storage means (1404), said computerized means (1402) carrying out the storage of said read identification data in said storage means (1404) when said read data is not already recorded in said storage means (1404).

14. System according to claim 13, **characterized in that** the identification tags (302,304) are RFID tags, and the reading means comprise at least one RFID antenna (1304) arranged on a portal (1302) through which said devices (302) pass.

15. System according to claim 13, **characterized in that** the identification tags (302,304) are RFID tags, and the reading means comprise at least one RFID antenna (1304) arranged on a portable reader.

16. Installation for monitoring reusable devices (300) for the transport and conservation of goods, comprising several systems (1300) according to any one of claims 13 to 15, said installation comprising a module (1400) in communication, at least indirectly, with said systems (1300), the identification data read by each of said systems (1300) being communicated to said module (1400).

## Patentansprüche

1. Wieder verwendbare Vorrichtung für den Warentransport und die Warenlagerung, welche im wesentlichen eine rechteckige Form aufweist, umfassend mindestens zwei elektromagnetische Identifikationsetiketten (302, 304), wobei die Identifikationsetiketten (302, 304) mindestens eine gemeinsame Identifizierungsangabe aufweisen und an zwei im wesentlichen entgegengesetzten Stellen auf dem Behälter angebracht sind, **dadurch gekennzeichnet, dass** die Identifikationsetiketten (302, 304)
- auf der äusseren Seite zweier seitlichen Wandungen (306, 308),
- in einem Abstand von grösser oder gleich 2 mm von der inneren Seite (902) des Behälters, und
- in einem Abstand von kleiner oder gleich 3 cm von zwei diametral entgegengesetzt vertikalen Kanten (314, 316) des Behälters angebracht sind.

2. Vorrichtung nach Anspruch 1, **dadurch gekennzeichnet, dass** die seitlichen Wandungen, auf welchen die Etiketten angebracht sind, entgegengesetzte Wandungen sind.

3. Vorrichtung nach Anspruch 1, **dadurch gekennzeichnet, dass** die seitlichen Wandungen, auf welchen die Etiketten angebracht sind, aneinander angrenzende Wandungen sind.

4. Vorrichtung nach einem der vorangehenden Ansprüche, **dadurch gekennzeichnet, dass** jede Etikette (302, 304) in der Nähe des oberen Randes (310, 312) der seitlichen Wandung (306, 308), auf welcher sie angebracht sind, angebracht ist.

5. Vorrichtung nach Anspruch 4, **dadurch gekennzeichnet, dass** jede Etikette in einem Abstand von grösser oder gleich 3 cm von dem oberen Rand (310, 312), in dessen Nähe sie angebracht sind, angebracht ist.

6. Vorrichtung nach einem der vorangehenden Ansprüche, **dadurch gekennzeichnet, dass** mindestens eine Etikette in einer Aussparung angebracht ist, welche auf der äusseren Seite der Vorrichtung geformt ist, und dass die Etikette in Bezug auf die Ebene (904), welche durch die äussere Seite der Vorrichtung gebildet ist, eingerückt ist.

7. Vorrichtung nach einem der vorangehenden Ansprüche, **dadurch gekennzeichnet, dass** sie mindestens eine Form aufweist, welche auf der äusseren Seite der Vorrichtung in der Nähe der Etikette (302, 304) oder um die Etikette herum angebracht ist, wodurch die Etikette (302, 304) gegenüber äusseren Stössen geschützt wird, wobei die Etikette sich in Bezug auf die äusseren Bereich dieser Form eingerückt befindet.

8. Vorrichtung nach einem der Ansprüche 6 oder 7, **dadurch gekennzeichnet, dass** die Etikette (302, 304) um einen Abstand von grösser oder gleich 5 mm eingerückt angebracht ist.

9. Vorrichtung nach einem der vorangehenden Ansprüche, **dadurch gekennzeichnet, dass** sie seitliche faltbare Wandungen aufweist, wobei jede Etikette (302, 304) auf einem Abschnitt einer Wandung angebracht ist, der in der gefalteten Position sich auf einer anderen Wandung oder auf einem Abschnitt einer anderen Wandung befindet.

10. Vorrichtung nach einem der vorangehenden Ansprüche, **dadurch gekennzeichnet, dass** sie eine Form aufweist, welche angepasst ist, um mit mehreren anderen, identischen Vorrichtungen in Stapeln eingeordnet zu werden.

11. Vorrichtung nach einem der vorangehenden Ansprüche, **dadurch gekennzeichnet, dass** mindestens eine der Identifikationsetiketten (302, 304) eine RFID Etikette ist.

12. Vorrichtung nach Anspruch 11, **dadurch gekennzeichnet, dass** die RFID Etiketten im UHF-Bereich funktionieren.

13. System zur Identifizierung von wieder verwendbaren Vorrichtungen (300) für den Warentransport und die Warenlagerung, wobei das System umfasst:
- mindestens zwei Vorrichtungen (300) nach einem der vorangehenden Ansprüche, wobei jede Vorrichtung (300) mindestens zwei elektromagnetische Identifikationsetiketten (302, 304) umfasst, welche mindestens eine identische Identifizierungsangabe aufweisen, wobei die Vorrichtungen (300) sich in einer Form von mindestens einem Stapel, umfassend eine Vielzahl von Vorrichtungen (300), zeigen,
- Speichermittel (1312) zur Speicherung von Identifizierungsangaben,
- Lesemittel (1304) zum Lesen einer neuen Identifizierungsangabe, und
- Mittel zur elektronischen Datenverarbeitung (1402) zum Vergleichen von der gesagten gelesenen Identifizierungsangabe mit Identifizierungsangaben, welche in Speichermitteln (1404) gespeichert sind, wobei die Mittel zur elektronischen Datenverarbeitung (1402) die Speicherung der gelesenen Identifizierungsangabe in den Speichermitteln (1404) veranlassen, wenn die gelesene Identifizierungsangabe nicht bereits in den Speichermitteln (1404) gespeichert ist.

14. System nach Anspruch 13, **dadurch gekennzeichnet, dass** die Identifikationsetiketten (302, 304) RFID Etiketten sind, und dass die Lesemittel mindestens eine RFID Antenne (1304) umfassen, welche auf einem Rahmen (1302) angebracht ist, durch welchen die Vorrichtungen (300) gehen.

15. System nach Anspruch 13, **dadurch gekennzeichnet, dass** die Identifikationsetiketten (302, 304) RFID Etiketten sind, und dass die Lesemittel mindestens eine RFID Antenne (1304) umfassen, welche auf einem tragbaren Lesegerät angebracht ist.

16. Installation zur Nachverfolgung von wieder verwendbaren Vorrichtungen (300) für den Warentransport und die Warenlagerung umfassend mehrere Systeme (1300) nach einem der Ansprüche 13 bis 15, wobei die Installation ein Modul (1400) umfasst, zur wenigstens indirekten Kommunikation mit den Systemen (1300), wobei die von jedem System (1300) gelesenen Identifikationsangaben an das Modul (1400) übermittelt werden.
